Europäisches Patentamt

European Patent Office

Office européen des brevets

(19)

(11) Veröffentlichungsnummer: **0 060 448**
**B1**

(12) # EUROPÄISCHE PATENTSCHRIFT

(45) Veröffentlichungstag der Patentschrift:
19.06.85

(51) Int. Cl.⁴: **F 16 L 47/02**

(21) Anmeldenummer: **82101668.0**

(22) Anmeldetag: **04.03.82**

(54) **Muffe zum Verkleben von Rohrenden.**

(30) Priorität: **12.03.81 DE 3109422**

(43) Veröffentlichungstag der Anmeldung:
**22.09.82 Patentblatt 82/38**

(45) Bekanntmachung des Hinweises auf die Patenterteilung:
**19.06.85 Patentblatt 85/25**

(84) Benannte Vertragsstaaten:
**AT BE CH DE FR GB IT LI NL SE**

(56) Entgegenhaltungen:
**DD - A - 75 909**
**DE - A - 1 525 952**
**DE - B - 1 192 469**
**DE - U - 1 863 429**
**DE - U - 7 337 975**
**FR - A - 2 142 171**
**US - A - 3 920 787**
**US - A - 3 989 281**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Dierdorf, Hans-Rolf, Ludwig-Wolker-Strasse 25, D-4018 Langenfeld (DE)**

## Beschreibung

Die Erfindung betrifft eine Muffe zum Verkleben der Enden von zwei Rohren nach dem Injektionsverfahren, in die die zu verbindenden Rohrendstücke von entgegengesetzten Seiten her einzuschieben sind und dann Klebstoff in dem zwischen der Außenfläche jedes der Endstücke und Muffeninnenfläche gebildeten Ringraum zu injizieren ist, wobei der jeweilige Ringraum durch je einen am Rohrende und dem Muffenende von der Muffeninnenfläche aus radial nach innen vorspringenden, im wesentlichen einen Zentrier- und/oder Dichtring bzw. -sitz bildenden Ringsteg axial begrenzt ist, wobei die Muffe in einen im wesentlichen hinterschneidungsfreien rohrförmigen Muffengrundkörper und mindestens einen an das zugehörige Längsende des Grundkörpers angepaßt anzusetzenden, einen radial nach innen vorspringende Ringstege aufnehmenden Ringkörper besteht. Sowohl die Muffe als auch die Rohre bestehen vorzugsweise aus Kunststoff, insbesondere aus PVC-hart.

Nach einem aus der DE-U-7 337 975 bekannten Verfahren kann die Verbindung zwischen den Rohrenden und der Muffe dadurch verfestigt werden, daß man Klebstoff, insbesondere lösungsmittelhaltigen PVC-Klebstoff mittels in der Muffe vorgesehener Löcher unter erheblichem Druck, von z. b. 2 bis 50 bar, in den von der Muffe und den zu verbindenden Rohrenden zusammen gebildeten Ringraum einführt. Der Ringraum kann dabei eine in radialer Richtung gemessene Spaltweite von größenordnungsmäßig 0,1 bis 0,8 mm und eine in Richtung gemessene Spaltlänge von etwa $9/10$ der gesamten Muffenklebelänge aufweisen. Der jeweilige Klebstoff wird vorzugsweise durch eine etwa in der Mitte der Länge jedes Ringraums vorgesehene radiale Bohrung eingespritzt. Um zu verhindern, daß der Klebstoff an den axialen Enden der Muffe längs der Außenfläche der zu verbindenden Rohre austritt oder an den Stümpfen der zu verbindenden Rohre in das Rohrinnere eintritt, werden die genannten Ringstege auf der Innenfläche der Muffe angebracht. Ein entscheidender Nachteil für die großtechnische Anwendung der Klebstoffapplikation durch die Injektion in dem Rohr-Muffenverband besteht aber noch darin, daß das Herstellen einer geeigneten Injektionsmuffe einen erheblichen technischen Aufwand fordert. Die Schwierigkeiten treten besonders deutlich beim Herstellen der Muffe im Spritzgußverfahren zutage und bestehen darin, daß Spritzgußverbindungsstücke und -formteile mit einer nicht zylindrischen oder konischen Innenform, z. B. bei nut- oder linsenförmiger Ausbildung der Klebezone, nur mit relativ großen Maßtoleranzen aus sogenannten hinterschnittenen Spritzgußformen zu entformen sind. Bei den Injektionsmuffen können so große Maßabweichungen in der Regel nicht in Kauf genommen werden.

Ferner ist aus DD-A-75 909 ein Verfahren sowie eine Vorrichtung zum Verbinden von Kunststoffrohrleitungen miteinander bekannt. Dabei werden Abdichtringe verwendet, welche vermittels Verschraubungen relativ zur Muffe arretiert werden. Nach dem Abbinden des Klebstoffs werden die Verschraubungen entfernt.

Durch den Stand der Technik sind demgemäß Muffen bekanntgeworden, bei deren Herstellung das Problem der Wirtschaftlichkeit, insbesondere bei großen Stückzahlen, nicht berücksichtigt wurde.

Die Aufgabe besteht darin, Injektionsmuffen zum Verkleben der Enden von zwei Rohren mittels Injektionsverfahren in großer Stückzahl wirtschaftlich herzustellen. Dieses soll nach dem Spritzgußverfahren möglich sein, ohne daß durch die erforderlichen Maßtoleranzen eine Beeinträchtigung der verfahrenstechnischen Maßnahmen eintritt.

Die Lösung besteht in der Ausgestaltung der Muffe gemäß Kennzeichen des neuen Patentanspruchs.

Anhand der schematischen Darstellung eines Ausführungsbeispiels werden weitere Einzelheiten der Erfindung erläutert. Es zeigt

Fig. 1 eine Muffenverbindung mit zwei Rohrenden und

Fig. 2 eine vergrößerte Darstellung der geteilten Muffe im Längsschnitt.

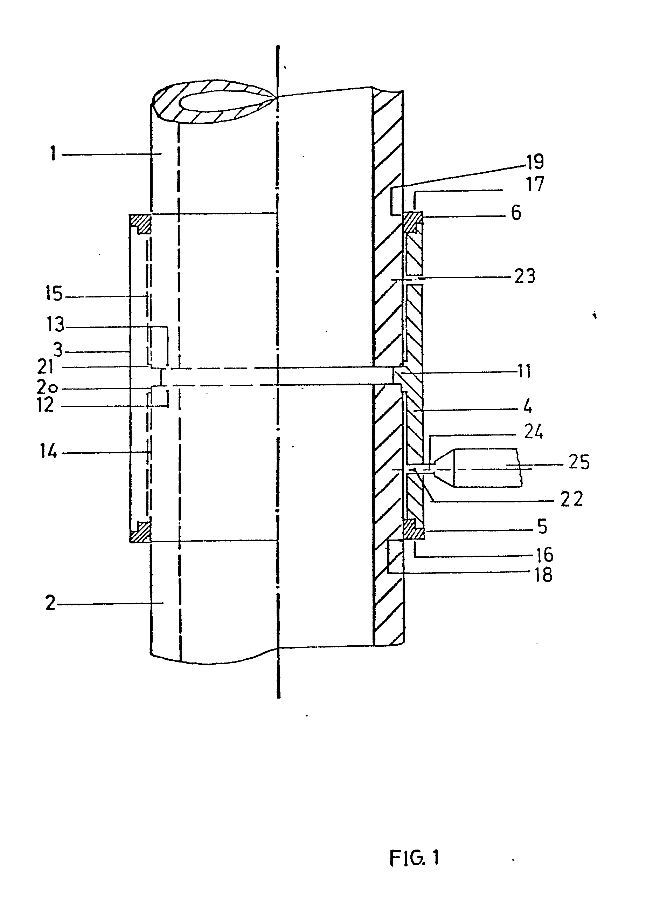

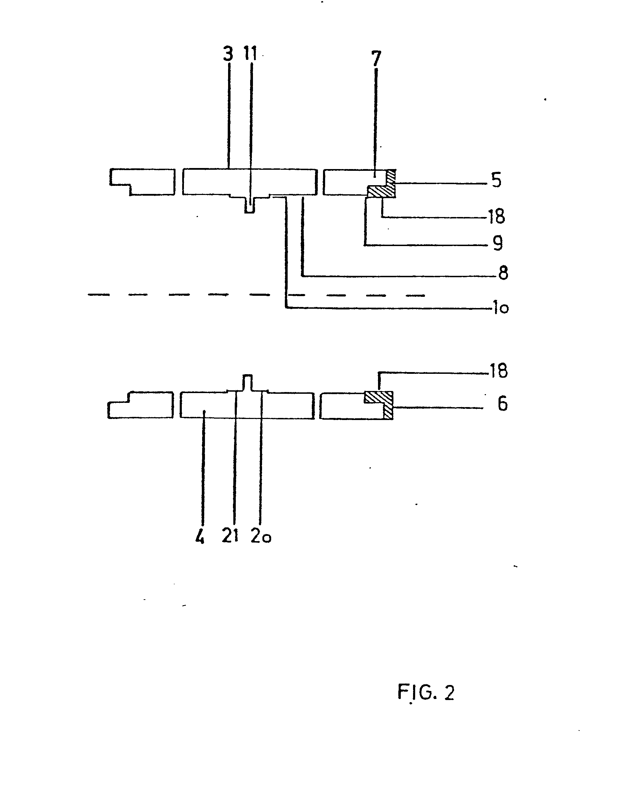

Die beiden in Fig. 1 dargestellten, insbesondere aus PVC-hart bestehenden Rohrenden 1 und 2 mit Außendurchmessern von z. B. etwa 63 mm werden durch die vorzugsweise aus dem gleichen Werkstoff bestehende Muffe 3 ausgerichtet und fixiert. Die vergrößert auch in Fig. 2 dargestellte Muffe 3 besteht aus einem Grundkörper 4 und an die Längsenden abgestuft angepaßt angesetzten Ringkörpern 5 und 6. Zwischen dem Grundkörper 4 und den Ringkörpern 5, 6 ist eine den jeweiligen Ringkörper 5, 6 relativ zum Grundkörper 4 und damit diesen relativ zum Rohrende 1, 2 radial festlegende, formschlüssige Verbindung vorgesehen. Der Innendurchmesser der Ringkörper ist dabei kleiner als der Innendurchmesser des größten Teils des Muffenkörpers 4.

Nach Aufsetzen des Ringkörpers 5, 6 auf das zugehörige Längsende 7 des Grundkörpers 4 entsteht daher an der Grenze der Innenfläche 8 des Grundkörpers 4 zum Ringkörper 5, 6 eine umlaufende Stufe 9. Eine etwa ebenso hohe Stufe 10 ist im mittleren Bereich der Innenfläche 8 des Grundkörpers 4 vorgesehen. Letztere Stufe 10 gehört zu einem Trennsteg 11, der als Anschlag für die Längsenden 12 und 13 der in die Muffe 3 einzusetzenden Rohrenden 1 und 2 vorgesehen ist. Es wird damit je ein Ringraum 14 und 15 durch je einen an den Rohrenden 12, 13 und an den Muffenenden 16, 17 von der Muffeninnenfläche 8 aus radial nach innen vorspringenden, im wesentlichen einen Zentrier- und/oder Dichtring bzw. -sitz bildenden Ringsteg 18 bis 21 axial begrenzt. Der lichte Durchmesser der Stege 18 bis 21 bildet zusammen mit der Außenfläche der Rohrenden 1 und 2 einen dichtenden Schiebesitz.

Zu jedem Ringraum 14, 15 führt je eine Bohrung 22, 23, in welche eine Injektionsdüse 24 einzuführen ist. Der jeweilige lösungsmittelhaltige Klebstoff kann unter Druck aus einem Vorratsgefäß 25 durch die Injektionsdüse 24 und die Bohrung 22 bzw. 23 in den jeweiligen Ringraum 14 bzw. 15 geleitet werden.

Sowohl der Grundkörper 4 als auch die Ringkörper 5 und 6 der Muffe 3 gemäß Ausführungsbeispiel besitzen keine die Ausformungsgenauigkeit beim Spritzgießen behindernde Hinterschneidung. Die einzeln herzustellenden Teile können daher problemlos und wirtschaftlich in großtechnischem Maßstab auch im in diesem Zusammenhang vorteilhaften Spritzgußverfahren mit der für das Injektions-Klebeverfahren erforderlichen Genauigkeit hergestellt werden. Mit der erfindungsgemäßen Zwei- und/oder Mehrfachteilung der Muffe wird es also möglich, selbst extrem hinterschnittene Muffenformen im Spritzgußverfahren exakt zu gestalten und zum kraftschlüssigen und gas- sowie wasserdicht mit dem entsprechenden Rohrmaterial durch Injektionsklebung zu verbinden.

## Patentanspruch

Muffe (3) zum Verkleben der Enden von zwei Rohren nach dem Injektionsverfahren, in die die zu verbindenden Rohrendstücke (1, 2) von entgegengesetzten Seiten her einzuschieben sind und dann Klebstoff in dem zwischen der Außenfläche jedes der Endstücke und der Muffeninnenfläche (8) gebildeten Ringraum (14, 15) zu injizieren, wobei der jeweilige Ringraum durch je einen am Rohrende (12, 13) und dem Muffenende (16, 17) von der Muffeninnenfläche (8) aus radial nach innen vorspringenden, im wesentlichen einen Zentrier- und/oder Dichtring bzw. -sitz bildenden Ringsteg (18, 19) axial begrenzt ist, wobei die Muffe in einen im wesentlichen hinterschneidungsfreien rohrförmigen Muffengrundkörper (4) und mindestens einen an das zugehörige Längsende (7) des Grundkörpers (4) angepaßt anzusetzenden, einen radial nach innen vorspringende Ringstege (18, 19) aufnehmenden Ringkörper (5, 6) besteht, dadurch gekennzeichnet, daß der rohrförmige Grundkörper (4) mit einem in der Mitte der Innenfläche umlaufenden, zum dichtenden und zentrierten Einsetzen der Enden der zu verbindenden Rohrendstücke (1, 2) geformten Ringsteg (20, 21) versehen ist, daß jeder Ringkörper (5, 6) einen L-förmigen Querschnitt aufweist, wobei einer der Schenkel des Ringkörpers (5, 6) axial nach innen gerichtet ist und in eine am Ende der inneren Fläche des Grundkörpers (4) angeordnete Ringstufe (9) eingreift, derart, daß eine radial festgelegte, formschlüssige Verbindung zwischen Grundkörper (4) und Ringkörper (5, 6) entsteht, und daß die Muffe (3) nach dem Spritzgußverfahren hergestellt ist.

## Claim

Bushing (3), for adhesively connecting the ends of two pipes by the injection process, into which the pipe end pieces (1, 2) to be connected are to be pushed in from opposite sides and adhesive substance is then to be injected into the annular space (14, 15) formed between the outer surface of each of the end pieces and the inner bushing surface (8), wherein each annular space is limited axially by a respective annular web (18, 19) projecting radially inwards from the inner bushing surface (8) at the pipe end (12, 13) and at the bushing end (16, 17) and forming substantially a centring and/or sealing ring or seat, wherein the bushing consists of a basic tubular bushing body (4) substantially free of undercuts and at least one annular body (5, 6), which receives one of the annular webs (18, 19) projecting radially inwards and is to be placed fittingly onto the associated longitudinal end (7) of the basic body (4), characterised thereby, that the basic tubular body (4) is provided with an annular web (20, 21), which extends around in the middle of the inner surface and is shaped for the sealing and centring insertion of the pipe end pieces (1, 2) to be connected, that each annular body (5, 6) displays an L-shaped cross-section, wherein one of the limbs of the annular body (5, 6) is directed axially inwards and engage into an annular step (9) arranged at the end of the inner surface of the basic body (4) in such a manner that a radially fixedly located, shape-locking connection arises between the basic body (4) and annular body (5, 6), and that the bushing (3) is produced by the injection moulding process.

## Revendication

Manchon (3) pour le raccordement des extrémités de deux tuyaux selon le procédé d'injection, dans lequel les tronçons terminaux de tuyau à raccorder (1, 2) peuvent être emmanchés depuis des côtés opposés et on peut alors injecter de l'adhésif dans l'espacement annulaire (14, 15) formé entre la surface extérieure de chacun des tronçons terminaux et la surface intérieure (8) du manchon, chaque espacement annulaire étant limité axialement par une collerette annulaire (18, 19) faisant saillie radialement vers l'intérieur à l'extrémité (12, 13) des tuyaux et à l'extrémité (16, 17) du manchon, par rapport à la surface intérieure (8) du manchon et formant pratiquement un anneau ou siège de centrage et/ou d'étanchéité, le manchon étant constitué d'un corps tubulaire de base (4) pratiquement exempt de contre-dépouille et d'au moins un corps annulaire (5, 6) à appliquer de façon ajustée à chaque extrémité longitudinale (7) du corps de base (4) et comportant des nervures annulaires (18, 19) faisant saillie radialement vers l'intérieur, manchon caractérisé par le fait que le corps tubulaire de base (4) est muni d'une nervure annulaire (20, 21) faisant le tour dans la partie médiane de la surface intérieure et présentant la forme voulue pour insérer de façon étanche et centrée les extrémités des tronçons terminaux de tuyau (1, 2) à raccorder, que chaque corps annulaire (5, 6) présente une section en L, l'une des ailes de ce corps annulaire (5, 6) étant dirigée axialement vers l'intérieur et s'engageant dans un gradin annulaire (9) disposé à l'extrémité de la surface intérieure du corps de base (4), de telle sorte qu'il se produit une liaison rigide, fixée axialement, entre le corps de base (4) et les corps annulaires (5, 6) et que le manchon (3) est fabriqué selon le procédé de moulage par injection.

FIG. 1

FIG. 2